# EUROPÄISCHE PATENTSCHRIFT

(11) **EP 0 528 382 B1**
(45) Veröffentlichungstag und Bekanntmachung des Hinweises auf die Patenterteilung: **22.02.1995**
(21) Anmeldenummer: 92113922.6
(22) Anmeldetag: 14.08.1992
(51) Int. Cl.: B62M 11/12, F16H 15/28

(54) **Antriebsnabe für ein Fahrzeug, insbesondere Fahrrad, mit stufenlos einstellbarem Übersetzungsverhältnis**
Drive hub for a vehicle, in particular for bicycle, with continuous variable transmission ratio
Moyeu d'entraînement pour un véhicule, en particulier pour bicyclette, avec un rapport de transmission continuellement variable

(30) Priorität: 16.08.1991 DE 4127030
(43) Veröffentlichungstag der Anmeldung: 24.02.1993
(73) Patentinhaber: Fichtel & Sachs AG, D-97419 Schweinfurt (DE)
(72) Erfinder: Schievelbusch, Ulrich, Prof. Dipl.-Ing., W-3500 Kassel (DE)
(74) Vertreter: Prechtel, Jörg, Dipl.-Phys. Dr.

(56) Entgegenhaltungen:
- EP-A- 0 432 742
- GB-A- 592 320
- US-A- 2 469 653
- US-A- 2 931 235

## Beschreibung

Die Erfindung betrifft eine Antriebsnabe für ein Fahrzeug, insbesondere Fahrrad, mit einem Reibradgetriebe, dessen Übersetzungsverhaltnis stufenlos einstellbar ist.

Aus dem Handbuch "Bicycling Science", Frank Rowland Witt, David Gordon Wilson, The MIT-Press, Cambridge, London, 1988, 2. Ausgabe, Seite 282 sind mehrere Bauprinzipien von Reibradgetrieben bekannt, wobei auf die Problematik derartiger Reibradgetriebe in Verbindung mit Fahrradnaben hingewiesen wird. Diese liegt darin, daß bei Fahrradnaben relativ hohe Drehmomente bei geringen Drehzahlen zu übertragen sind, wobei das Übersetzungsverhältnis derart einstellbar sein soll, daß sich je nach Bedarf die Nabenhülse schneller oder langsamer als der Antreiber dreht. Eine der prinzipiellen dargestellten Bauformen ist ein Reibradgetriebe in Form eines Kugelreibradgetriebes, wobei ortsfest mit winkelverstellbaren Kugelachsen gelagerte Reibkugeln am konusartig ausgebildeten Außenumfang sowohl eines Antriebsrads als auch eines Abtriebsrads abrollen zur Übertragung eines entsprechenden Drehmoments von der Antriebsscheibe auf die Abtriebsscheibe.

Die DE-21 36 243 A1 zeigt ein Standgetriebe mit Eingangswelle und einer zu dieser koaxialen Ausgangswelle. Die hier verwendeten Reibkugeln sind frei drehbar gelagert und rollen an insgesamt vier relativ zueinander verstellbaren Anlageflächen ab, wobei sich dementsprechend die Drehachse der Kugeln einstellt. Der Antrieb der Reibkugeln erfolgt über eine geneigte Außenumfangsfläche einer mit der Antriebsachse verbundenen Antriebsscheibe. Eine Spreizkupplung zur Erhöhung der Anpreßkraft mit wachsendem Drehmoment ist vorgesehen. Der Aufbau dieser Getriebe ist aufwendig. Eine direkte, präzise Einstellung eines gewünschten Übersetzungsverhältnisses ist nicht möglich. Das feststehende Gehäuse, in welchem unter anderem eine Antriebsschnecke der Steuereinrichtung vorgesehen ist, kann nicht durch eine drehende Nabenhülse ersetzt werden.

Die US-PS 4 735 430 zeigt eine Antriebsnabe für Fahrräder mit einem Reibradgetriebe, welches auf dem Prinzip der Drehmomentsübertragung mittels Reibrädern beruht, die an Toroidflächen einander gegenüberliegender Toroidscheiben abrollen. Die Nabenachse ist hier, anders wie bei herkömmlichen Antriebsnaben, drehbar im Fahrradrahmen gelagert, so daß spezielle Montagemittel erforderlich sind. Auch ist ein Planetengetriebe notwendigerweise vorgesehen, um die Nabenhülse in der Drehrichtung des Antreibers anzutreiben; dieses verschlechtert jedoch den Wirkungsgrad der Antriebsnabe und erhöht den Bauaufwand sowie das Nabengewicht.

Eine Verbesserung dieser Nabe zeigt die EP 0 432 742 A1. Die Nabenachse ist, wie bei Fahrrädern üblich, starr in den Fahrradrahmen einbaubar mit durch die hohle Nabenachse verlaufendem Gestänge zur Reibradgetriebesteuerung. Auch diese Fahrradnabe arbeitet nach dem Prinzip der Toroidscheiben. Zur Angleichung des Drehzahlbereichs dieser Nabe an die bei Fahrrädern üblichen Übersetzungsverhältnisse ist ein zusätzliches Planetengetriebe erforderlich, welches wiederum den Wirkungsgrad der Antriebsnabe verschlechtert und den Bauaufwand sowie das Nabengewicht erhöht.

Der Erfindung liegt die Aufgabe zugrunde, eine Fahrzeugantriebsnabe anzugeben, deren Übersetzungsverhältnis stufenlos einstellbar ist. Die Antriebsnabe soll von einfacher und kostengünstig herzustellender Konstruktion sein. Ferner soll der Wirkungsgrad hoch sein.

Die Erfindung geht von einer Antriebsnabe für ein Fahrzeug, insbesondere Fahrrad, aus, umfassend eine Nabenachse, die eine Achse der Nabe festlegt, eine die Nabenachse gleichachsig und relativ dazu drehbar umschließende Nabenhülse, einen relativ zur Nabenhülse und zur Nabenachse drehbar gelagerten Antreiber, ein innerhalb der Nabenhülse angeordnetes Reibradgetriebe im Kraftweg zwischen Antreiber und Nabenhülse, wenigstens eine bei vom Antreiber her erfolgendem Antrieb der Nabe den Kraftweg zwischen Antreiber und Nabenhülse schließende, bei nicht antreibendem Antreiber den Kraftweg öffnende Kupplungseinrichtung, und eine von außen betätigbare Steuereinrichtung zur stufenlosen Einstellung des Übersetzungsverhältnisses des Reibradgetriebes.

Die erfindungsgemäße Verbesserung besteht darin, daß das Reibradgetriebe als Kugelreibradgetriebe ausgebildet ist, umfassend zwei sich axial gegenüberliegende Ringe, einen Antriebsring und einen Abtriebsring, mehrere in Umfangsrichtung der Ringe verteilte, die Ringe reibschlüssig miteinander verbindende Reibkugeln, die mittels Kugelachsen drehbar gelagert sind, und einen mit der Nabenachse drehfest verbundenen Reibkugelträger, an dem die Reibkugeln mit ihren Kugelachsen jeweils in einer die Achse der Nabe enthaltenden Ebene schwenkbar gelagert sind, daß der Antriebsring und der Abtriebsring jeweils an der von der Achse abgewandten Seite der Reibkugeln mit den Reibkugeln in Reibkontakt stehen, und daß die Steuereinrichtung zum gemeinsamen Verschwenken der Kugelachsen ausgebildet ist.

Der Reibkontakt zwischen den Reibkugeln und Antriebsring und Abtriebsring findet an Rollkreisen mit relativ großem Durchmesser statt, so daß aufgrund des sich ergebenden langen Drehmoment-Hebelarms auch hohe Drehmomente ohne Schwierigkeiten übertragen werden können. Die die Kugeln an die Ringe pressenden Antriebskräfte zur Gewährleistung einer möglichst schlupfarmen gegenseitigen Mitnahme können sich daher in vertretbaren Grenzen halten. Auch können Kugeln mit relativ kleinem Durchmesser eingesetzt werden, die somit entsprechend geringen Einbauraum benötigen. Die Anzahl der Kugeln kann deshalb gegenüber der Anzahl der Räder bei Reibradgetrieben nach der Toroidbauweise erhöht werden kann, so daß sich das pro Kugel zu übertragende Drehmoment dementsprechend reduziert. Die Anpreßkraft verteilt sich auf eine größere Anzahl von Berührungsstellen mit entsprechend geringerer Belastung der Berührungsstellen. Ein nachgeschaltetes Planetengetriebe ist nicht erforderlich, da die Drehrichtung durch das Reibradgetriebe nicht umgekehrt wird und das Übersetzungsverhältnis ohne weiteres derart gewählt werden kann, daß die Drehgeschwindigkeit der Nabenhülse wahlweise kleiner, gleich oder größer ist als die Drehgeschwindigkeit des Antreibers. Im Vergleich zu einem Reibradgetriebe nach der Toroidbauweise kann der mögliche Übersetzungsbereich deutlich größer gewählt werden bei geringeren Anforderungen an die Herstellungsgenauigkeit.

Eine bevorzugte Weiterbildung der erfindungsgemäßen Antriebsnabe ist dadurch gekennzeichnet, daß die Nabenachse zweiteilig ausgebildet ist mit zwei Achshälften, an deren voneinander beabstandeten, innerhalb der Nabe gelegenen Enden jeweils eine Kugelträgerscheibe drehfest angebracht ist, daß die Kugelträgerscheiben miteinander zur Bildung eines Getriebegehäuses starr verbunden sind und daß das Getriebegehäuse als Reibkugelträger ausgebildet ist. Durch diese Zweiteilung der Nabe kann der Abstandsraum zwischen den inneren Nabenenden innerhalb der Nabe genutzt werden, insbesondere zur Aufnahme von Teilen der Steuereinrichtung, was den kompakten Aufbau der Nabe fördert. Der Zusammenbau ist vereinfacht. Nach Einbau der entsprechenden Teile der Steuereinrichtung können die beiden Achshälften bevorzugt über den beide Kugelträgerscheiben starr miteinander verbindenden Ring fest zusammengebaut werden, so daß man eine in sich stabile Vormontageeinheit erhält, die dann in die Nabenhülse eingebaut wird. Die Teile, insbesondere die Steuerung, können mit hoher Präzision gefertigt und eingebaut werden. Auch ist eine genaue Fluchtung der Achshälften gewährleistet, so daß zuverlässige Funktion sämtlicher Teile auch nach längerem Gebrauch gewährleistet ist. Die Antriebsnabe kann problemlos am Fahrradrahmen montiert werden, so daß keine speziell vorbereiteten Fahrzeugrahmen erforderlich sind.

Die Kugelachsen der Reibkugeln werden von der Steuereinrichtung derart verschwenkt, daß der Schwenkmittelpunkt mit dem Mittelpunkt der Kugeln möglichst genau zusammenfällt. Um sicherzustellen, daß zudem die Schwenkebene der jeweiligen Kugelachse mit der Achse der Nabe in einer Ebene liegt, wird vorgeschlagen, daß die Kugelträgerscheiben mit radial verlaufenden Nuten versehen sind zur Aufnahme der entsprechenden Enden der Kugelachsen. Bevorzugt ist hierbei vorgesehen, daß die Enden der Kugelachsen mit Gleitsteinen versehen sind, die in die radial verlaufenden Nuten der Kugelträgerscheiben eingesetzt sind. Um reibungsarmen Betrieb sicherzustellen, wird vorgeschlagen, daß die Nuten eine Breite aufweisen, die der der Gleitsteine zuzüglich eines angemessenen Bewegungsspiels entsprechen.

Um die gewünschte Schwenkbewegung der Drehachsen der Reibkugeln mit baulich einfachen Mitteln zu erhalten, wird vorgeschlagen, daß die Steuereinrichtung eine Drehachse sowie zwei mit dieser drehfest gekoppelte Kurvenscheiben umfaßt, daß die Kurvenscheiben beidseits der Reibkugeln angeordnet sind mit Anlage der Enden der Kugelachsen an den Kurven der Kurvenscheiben, und daß die Kurven mit den zueinander entgegengesetzt verlaufenden Steigungsrichtungen ausgebildet sind zum Verschwenken der Kugelachsen um den Mittelpunkt der Reibkugeln bei Drehung der Kurvenscheiben relativ zum Reibkugelträger. Hierbei ist bevorzugt vorgesehen, daß die Reibkugeln auf ihren Kugelachsen drehbar gelagert sind, wobei jeweils beide Enden dieser Kugelachsen mit Gleitsteinen verbunden sind, die ihrerseits die Kurven der Kurvenscheiben berühren. Ferner wird vorgeschlagen, daß die Berührungsflächen der Gleitsteine mit den Kurven der Kurvenscheiben in Form von Kugelkalotten ausgebildet sind.

Die in den radialen Gehäusenuten der Kugelträgerscheiben geführten Gleitsteine folgen aufgrund ihrer kugelförmigen Berührungsfläche spielfrei und reibungsarm den Kurven der Kurvenscheiben. Diese Kurven sind so ausgebildet, daß einer der beiden Gleitsteine bei Drehbetätigung der Steuereinrichtung von der einen Kurve radial nach außen gedrückt wird, während der andere, am gegenüberliegenden Ende der jeweiligen Kugelachse angebrachte Gleitstein durch diesen Druck radial nach innen geschoben wird, wobei die Verschwenkung um die Kugelmitte erfolgt. Die Kurve für diesen geschobenen Gleitstein kann ohne weiteres derart ausgebildet sein, daß sie sich eng und wiederum ohne nennenswertes Spiel an diesen geschobenen Gleitstein anlegt. Bei Umkehrung der Steuerdrehrichtung wird die Kugelachse daher sogleich in die entgegengesetzte Richtung verschwenkt, ohne daß bei dieser Richtungsumkehr ein nennenswertes Spiel auftritt. Spiel zwischen einer der Gleitsteine und seiner Kurvenscheibe würden einen lästigen Totgang in der Steuereinrichtung zur Folge haben.

Die Forderungen an die Kurven werden dann erfüllt, wenn diese, wie erfindungsgemäß vorgeschlagen, derart zueinander symmetrisch ausgebildet sind, daß sie durch Drehung um eine zur Achse der Nabe senkrechte Drehachse um 180° jeweils ineinander übergehen.

Die Steuereinrichtung wird erfindungsgemäß also dadurch von außen betätigt, daß ein durch die hohle Antriebsnabe ausgeführtes Steuerelement vorwärts oder rückwärts gedreht wird, um dementsprechend Berggang- oder Schnellgangcharakteristik der Nabe zu erhalten. Diese Drehbewegung kann elektrisch oder manuell ausgelöst werden, insbesondere mit Hilfe eines entsprechenden Drehgriffs. Wahlweise kann die Drehbewegung auch in die übliche Linearbewegung umgesetzt werden.

Um die Lager der Reibkugeln, insbesondere die Kurvenscheiben, von radialen Kräften zu entlasten und gleichzeitig guten Reibkontakt der Kugeln an den Ringen zu gewährleisten, wird vorgeschlagen, daß sich sämtliche Reibkugeln am Außenumfang eines in der Antriebsnabe um die Achse drehbar gelagerten Rings abstützen.

Um den Anpreßdruck der Kugeln am Antriebsring bzw. Abtriebsring wahlweise variieren zu können, insbesondere bei höherem Drehmoment zu vergrößern, wird vorgeschlagen, daß der Ring in der Antriebsnabe axial beweglich gelagert ist und einen zur Achse geneigt verlaufenden Umfangsflächenabschnitt aufweist, an dem die Reibkugeln abrollen zur Vorspannung der Reibkugeln radial nach außen durch entsprechende axiale Verschiebung des Rings in einer Vorspannrichtung.

Um in sämtlichen Betriebsarten der Antriebsnabe, also auch beim annähernd drehmomentfreien Anfahren, einen ausreichenden Reibungskraftschluß zwischen den Reibkugeln und Antriebsring und Abtriebsring sicherzustellen, wird ein Vorspannfederelement, vorzugsweise in Form einer Tellerfeder, vorgeschlagen zur axialen Vorspannung des Rings in Vorspannrichtung.

Um eine Selbstzentrier-Funktion zu erhalten und zudem einen mit der seitlichen Verschiebung des Rings allmählich ansteigenden radialen Anpreßdruck sicherzustellen, wird vorgeschlagen, daß der Außenumfang des Rings einen mittleren Abschnitt mit toroidförmiger konkaver Wölbung mit einem den Radius der Reibkugeln übersteigenden Torus-Radius aufweist sowie sich in axialer Richtung beidseits anschließend jeweils einen konischen Abschnitt mit in Richtung weg vom mittleren Abschnitt zunehmendem Durchmesser.

Die Steuereinrichtung ist bevorzugt mit einer diese in eine Ausgangsposition vorspannenden Rückstellfeder versehen, so daß sich entsprechende Federelemente außerhalb der Antriebsnabe erübrigen. Die Ausgangsposition kann die Neutralposition mit zur Nabenachse parallelen Reibkugelachsen sein, bei welcher das Übersetzungsverhältnis 1:1 ist. Durch Schwenken der Kurvenscheiben in der einen oder anderen Richtung entgegen der Federkraft der Rückstellfeder kann das Übersetzungsverhältnis vergrößert bzw. verkleinert werden.

Um die während des Betriebs auftretenden Reaktions-Drehmomente ohne weiteres auf den Fahrzeugrahmen ableiten zu können, wird erfindungsgemäß ein mit der Nabenachse drehfest verbundener, am Fahrzeug befestigbarer Hebel vorgeschlagen. Diese kann entsprechend den Bremshebeln bei den üblichen Rücktrittnaben am Fahrzeugrahmen befestigt werden.

Damit bei nicht betätigtem Antrieb während der Fahrt das Getriebe stillstehen kann und somit keine zusätzlichen Verluste erzeugt, umfaßt die Kupplungseinrichtung erfindungsgemäß eine Klinken-Freilaufkupplung - diese kann einen mit der Nabenhülse drehfest verbundenen Klinkenträger umfassen, an dem Klinken gelagert sind, die in eine Klinkenverzahnung einer mit dem Abtriebsring verkoppelten Scheibe eingreifen.

Um mit zunehmendem auf die Antriebsnabe wirkenden Drehmoment auch eine zunehmende Anpreßkraft zu erhalten, mit dem die Reibkugeln an die im wesentlichen konisch ausgebildeten, zur Achse der Nabe hin gerichteten Innenumfangsflächen (Laufbahnen) von Antriebsring und Abtriebsring andrücken, wird erfindungsgemäß zumindest eine Spreizkupplung im Kraftweg zwischen Antreiber und Nabenhülse vorgesehen. Diese Spreizkupplung bewegt mit zunehmenden Drehmoment Antriebsring und Abtriebsring in axialer Richtung zunehmend aufeinander zu, so daß sich dementsprechend der Antriebsdruck erhöht.

Besonders bevorzugt ist vorgesehen, daß der Antriebsring und der Abtriebsring mit je einer Spreizkupplung versehen sind. Mit Erhöhung des Drehmoments bewegen sich also Antriebsring und Abtriebsring in gleicher Weise in axialer Richtung aufeinander zu, so daß die auf die Kugeln wirkenden Axialkräfte im Gleichgewicht bleiben. Die Kugeln werden demnach in axialer Richtung nicht verstellt, was deren Lagerung sowie die Steuerung der Schwenkbewegung der Lagerachsen vereinfacht. In Verbindung mit dem im vorstehend erwähten Vorspannfederelement zur axialen Vorspannung des an der Innenseite der Kugeln anliegenden Rings ergibt sich eine Spielfreiheit des gesamten Systems mit im wesentlichen schlupffreiem Betrieb sowohl bei niedrigem Drehmoment als auch bei hohem Drehmoment. Bei niedrigem Drehmoment sind die Anpreßkräfte dementsprechend niedriger, so daß man hier besonders leichten Lauf erhält. Die beiden Spreizkupplungen führen zu einer gleichmäßigen Belastung und somit zu einer guten Zentrierung der Reibkugeln.

Einfachr Aufbau bei zuverlässiger Dauerfunktion ist dadurch gewährleistet, daß die Spreizkupplungen Kugeln umfassen, die innerhalb von Ausnehmungen des Antriebsrings und einer diesem gegenüberliegende Antriebsscheibe sowie in Ausnehmungen des Abtriebsrings und eines diesem gegenüberliegenden Druckrings angeordnet sind, wobei die Ausnehmungen in Umfangsrichtung von Schrägflächen begrenzt sind.

Eine besonders vorteilhafte Weiterbildung der Erfindung ist gekennzeichnet durch eine innerhalb der Nabenhülse angeordnete, den Antriebsring sowie den Abtriebsring umgreifende, zur Achse zentrisch angeordnete Hülse, die mit dem Antriebsring und dem Abtriebsring zur Aufnahme von zwischen dem Antriebsring und dem Abtriebsring wirkenden Axialkräften gekoppelt ist. Da die Hülse demzufolge die inneren Axialkräfte aufnimmt, werden die anderen Bauteile, insbesondere die zweiteilige Nabenachse mit dem die Reibkugeln tragenden Getriebegehäuse sowie auch die Nabenhülse von diesen Axialkräften entlastet.

Einfacher und dabei mechanisch stabiler Aufbau, der auch hohe Axialkräfte aufnehmen kann, ist dadurch gewährleistet, daß die Hülse an einem ihrer axialen Enden mit einem mit dem Abtriebsring gekoppelten Druckring starr verbunden ist und an ihrem anderen axialen Ende mit einer Hülsenscheibe starr verbunden ist, die sich an einer zwischen Hülsenscheibe und Antriebsring angeordneten, mit dem Antriebsring gekoppelten Antriebsscheibe abstützt.

Zu einfachem, mechanisch robustem Aufbau trägt auch ein zwischen Hülsenscheibe und Antriebsscheibe vorgesehenes Schrägkugellager bei, in Kombination mit jeweils einer Spreizkupplung zwischen Antriebsscheibe und Antriebsring sowie zwischen Abtriebsscheibe und Druckring. Die entstehenden inneren Axialkräfte und Radialkräfte können durch dieses einzelne Schrägkugellager ausgeglichen werden. Diese Anordnung hat ferner den Vorteil, daß die über das Schrägkugellager miteinander verbundenen Teile, nämlich Hülsenscheibe und Antriebsscheibe, mit Drehzahlen betrieben werden, die der Antriebsdrehzahl bzw. der Abtriebsdrehzahl entsprechen. In der Mittelstellung des Getriebes (Kugelachsen parallel zur Achse der Nabe) drehen diese Teile also gleich schnell, so daß sich keinerlei Reibungsverluste im Schrägkugellager ergeben. Gleichzeitig begünstigt die Wahl des Schrägkugellagers den einwandfreien Lauf der betroffenen Teile zueinander und erleichtert die Voreinstellung des Getriebes mittels Schraubverbindungen durch den bei Schrägkugellagern üblichen langsamen Übergang von der vorgespannten Einstellung zur losen Einstellung. Dieser Übergang kann durch die Wahl der Schmiegeradien zusätzlich noch beeinflußt werden. Ferner erlaubt das als Axialdrucklager arbeitende Schrägkugellager eine geringfügige kippbewegliche Führung der Teile zueinander, wodurch Ungenauigkeiten, hervorgerufen durch die Hintereinanderschaltung der beiden Spreizkupplungen sowie Fertigungsungenauigkeiten kompensiert werden können.

Aus den genannten Gründen ist es auch vorteilhaft, ein weiteres Schrägkugellager vorzusehen, nämlich zwischen einer Stirnwand der Nabenhülse und dem Antreiber.

Im folgenden wird ein Ausführungsbeispiel der Erfindung anhand von Zeichnungen erläutert. Hierbei zeigen:
- Fig. 1: einen Axiallängsschnitt durch die Antriebsnabe mit Darstellung nur einer einzigen von mehreren Kugeln,

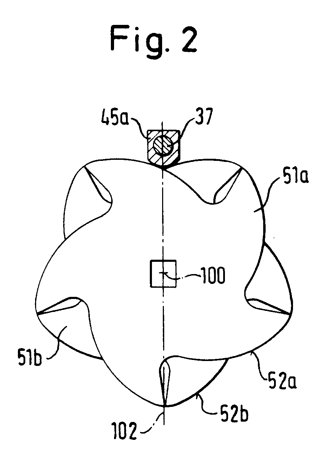

- Fig. 2: die beiden Kurvenscheiben der Steuereinrichtung mit der Anordnung eines Gleitsteines,
- Fig. 3: einen teilweise abgebrochenen Radialschnitt durch die Antriebsnabe nach Linie III-III in Fig. 1, und
- Fig. 4: einen Axiallängsschnitt durch den zentralen Bereich der Antriebsnabe mit einer von Fig. 1 abweichenden Stellung der Steuereinrichtung.

Die in den Figuren dargestellte Antriebsnabe umfaßt eine steuerseitige Achshälfte 1 und eine antriebsseitige Achshälfte 2, die zum Zwecke der Nabenbefestigung im Fahrradrahmen drehfest in der Nabe angeordnet sind. Muttern 1a und 2a bilden die Konterflächen, die zusammen mit hier nicht dargestellten Achsmuttern die Befestigung an den Ausfallenden des Rahmenhinterbaues darstellen. Die Mutter 2a bildet zusammen mit einem Antreiber 13 ein Kugellager 15; auf dem Antreiber 13 ist ein mit einem Schraubdeckel 97 fest verbundener Klinkenträger 91 ebenfalls über ein Kugellager 5 drehbar angeordnet. Der Schraubdeckel 97 gehört zu dem Zusammenbau einer Nabenhülse 9, zu dem noch ein Lageraußenring 14 gehört, der ebenfalls drehfest mit der Nabenhülse 9 verbunden ist.

Die Nabenhülse 9 ist antriebsseitig über die Kugellager 5 und 15 auf der antriebsseitigen Achshälfte 2 und abtriebsseitig über den Lageraußenring 14 über ein Kugellager 3 mit Stellkonus 3a auf der Achshälfte 1 gelagert, wobei zwischen Stellkonus 3a und Achshälfte 1 noch eine mit der Achshälfte 1 fest verbindbare Kugelträgerscheibe 39a angeordnet ist. Innerhalb der Nabenhülse 9 ist ein Kugelreibgetriebe 17 angeordnet mit einem Getriebegehäuse 39, welches sich aus der Kugelträgerscheibe 39a und einer dieser gegenüberliegenden Kugelträgerscheibe 39b und einem Trägerring 43 zusammensetzt, die miteinander - wie in unserem Beispiel dargestellt - durch Nieten 43a starr verbunden sind.

Bevor die Montage dieser drei Teile 39a, 39b und 43 erfolgt, werden eine Steuereinrichtung 50, bestehend aus Kurvenscheiben 51a und 51 b und einer Drehachse 53, sodann die beiden Achshälften 1 und 2, ein Führungsring 36 mit einer Tellerfeder 65 und einem Kugellager 66 und schließlich Kugeln 35 komplett mit Kugelachsen 37, die diese zentral durchdringen und mit diesen drehbar über Wälzlager verbunden sind, sowie mit Gleitsteinen 45a und 45b auf den beiden Enden der Kugelachsen eingelegt. Hierbei ist die Kurvenscheibe 51a der Steuereinrichtung 50 mit der Kugelträgerscheibe 39 über eine Rückstellfeder 65a derart verbunden, daß ihre Vorspannung ausreicht, die Kurvenscheiben 51a, 51b den gesamten Schaltdrehweg, der den Kurvenscheiben von außen über die Drehachse 53 in der einen und anderen Richtung aufgezwungen wird, wieder zurückzudrehen. Die Kurvenscheiben 51a und 51b sind formschlüssig mit der Drehachse 53 verbunden, wobei hier eine Steckverbindung vorgesehen is, die axial lösbar, aber in Drehrichtung weitgehend spielfrei ausgeführt ist. Nach erfolgter Montage ist nun ein Bausatz des Kugelreibgetriebes 17 entstanden, der als Rumpfgetriebe beispielsweise für Reparaturzwecke verwendbar ist.

An das Rumpfgetriebe schließen sich die bereits erwähnten Ringe, ein Antriebsring 25 und ein Abtriebsring 27 an, die beide mit den Kugeln 35 in ständigem Reibkontakt stehen. Für proportionale Anpressung sowie Ausgleich der axialen Abstandstoleranzen sorgen Spreizkupplungen 19 und 20, die durch ihre Fähigkeit, axiale Abstandsveränderungen mitzumachen bzw. zu erzeugen in der Lage sind, auch bei stark anwachsenden inneren axialen Kräften die Kugeln 35 in ihrer Mittellage zu zentrieren. Es handelt sich um kleine Relativbewegungen an diese Spreizkupplungen, die an dem jeweils das höhere Drehmoment übertragenden Ring 25 oder 27 auftreten. Dies hat zur Folge, daß zumeist nur einer der beiden Spreizkupplungen die Zustellarbeit übernimmt.

Der Kraftfluß läuft in der Nabe also wie folgt: Das vom Benutzer erzeugte Drehmoment wird über ein Kettenzahnrad 11 in den Antreiber 13 geleitet, der sich über seine Kugellager 5 und 15 im statischen Gleichgewicht befindet und am nabeninneren Ende mit einer Antriebsscheibe 33 formschlüssig, drehfest und steckbar verbunden ist, um das Drehmoment an die Spreizkupplung 19 weiterzugeben, wobei diese Antriebsscheibe 33 gleichzeitig den bezogen auf das Kugelreibgetriebe 17 axial äußeren Teil der Spreizkupplung 19 mit ihren Steigfeldern darstellt. Die Antriebsscheibe 33 ist im statischen Gleichgewicht durch ein Schrägkugellager 6, welchem die Aufgabe zukommt, in dem Kugelreibgetriebe 17 auftretende Axialkräfte auszugleichen und gleichzeitig die bauartbedingt möglichen und nötigen Zentrieraufgaben wahrzunehmen. Das Schrägkugellager 6 stützt sich einerseits an der Antriebsscheibe 33 und andererseits an einer Hülsenscheibe 12 ab.

Die Hülsenscheibe 12 ist außerdem über eine Hülse 10 mittels Schraubverbindungen mit einem Hülsendruckring 8 verbunden, der zu der Spreizkupplung 20 in Verbindung mit dem Abtriebsring 27 gehört. Die Spreizkupplungen 19 und 20 erzeugen ihre axiale Spreizung durch Kugeln 59 zwischen Antriebsscheibe 33 und Antriebsring 27 sowie durch Kugeln 60 zwischen Abtriebsring 27 und Hülsendruckring 8, die in bekannter Weise auf beiden Ringseiten in schraubenförmigen Steigfeldern (Ausnehmungen mit seitlichen Schrägflächen) liegen und auf diese Schrägflächen auflaufen, wenn die Partnerringe (Antriebsring 25 und Abtriebsring 27) gegeneinander verdreht werden und so den axialen Druck zwischen den Partnerringen aufbauen, nachdem die axial möglichen Wege erschöpft sind. Der Kraftfluß wird also vom Antriebsring 25 zum Abtriebsring 27 über die Kugeln 35 geleitet, wobei die der Achse 4 zugewandten, im wesentlichen kegelförmigen Laufbahnen 25a und 27a der Ringe 25 und 27 radial nach innen gerichtete Kräfte auf die Kugeln 35 auslösen, die aber vom Führungsring 36 aufgenommen werden, der spiellos mit den Kugeln 35 zusammenläuft und sozusagen den frei auf der Drehachse 53 drehbaren Innenring eines Kugellagers bildet. Hierdurch werden die Lagerungen der Kugeln 35 auf den Achszapfen 37 von diesen erheblichen radialen Kräften freigehalten.

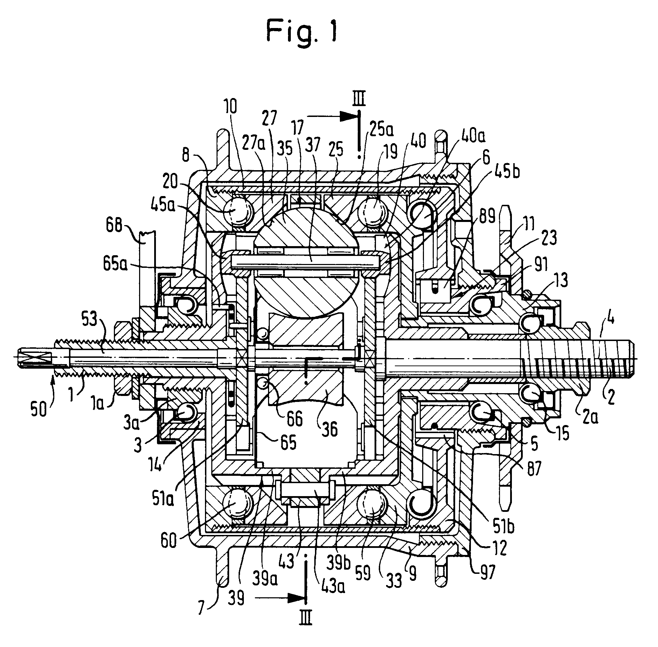

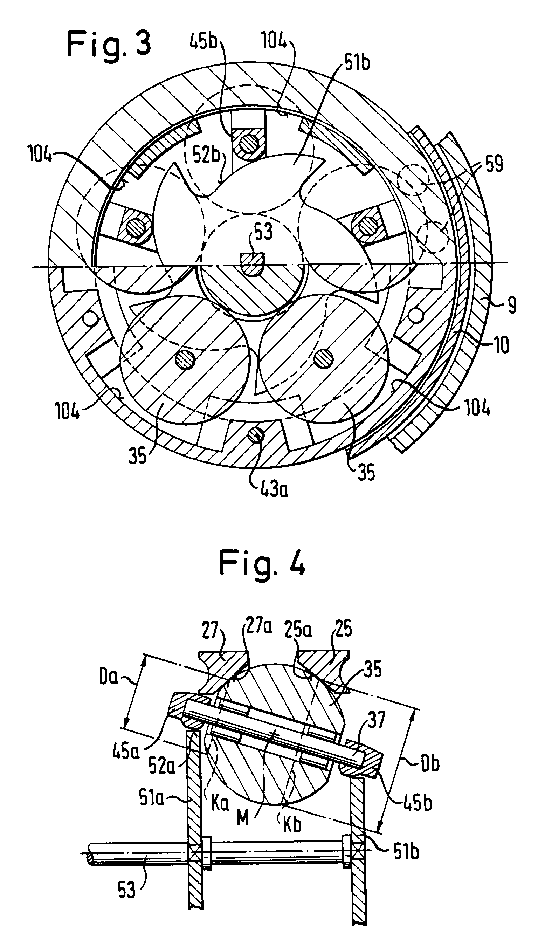

Die den Kugeln 35 zugewandten Laufbahnen 25a und 27a der Ringe 25 und 27 können - wie in Fig. 1 und Fig. 3 dargestellt - eine gerade Mantellinie haben. Zur besseren Abstimmung der Antriebsmomente mit den Axialkräften können die Laufbahnen auch konkav gekrümmte Mantellinien mit der Schnittebene gemäß Fig. 1 und 3 bilden mit einem Krümmungsradius größer als der Radius der Kugeln 35. Der Kraftfluß hat nach Durchlaufen des Kugelreibradgetriebes 17 über die Hülse 10 die Hülsenscheibe 12 erreicht, die an ihrem Innendurchmesser eine Klinkenverzahnung 87 trägt, die den Eingangsteil einer Klinken-Freilaufkupplung 23 darstellt. Klinken 89 liegen drehfest in einem Klinkenträger 91 und koppeln diesen mit der Hülsenscheibe 12 in Antriebsdrehrichtung. Der Klinkenträger 91 aber ist fester Bestandteil der Nabenhülse 9, mit der er über den Schraubdeckel 97 verbunden ist. Die statisch definierte Lagerung der Nabenhülse 9 erfolgt über den Außenring 14 des Kugellagers 3, dessen Stellkonus 3a schraubbar ist, wodurch die als Schrägkugellager ausgebildeten Kugellager 5 und 15 in ihre spiellose Position geschoben werden.

Wie schon erwähnt, bleiben die Lagerungen der Kugeln 35 auf ihren Kugelachsen 37 von Radialkräften frei. Tangentiale Kräfte aber sind es, die dort abgestützt werden müssen. Sie werden hervorgerufen durch die Reibkräfte von Antriebsring 25 und Abtriebsring 27 mit den Kugeln 35, wobei zueinander entgegengesetzt verlaufende Tangentialkräfte entstehen, die die Kugeln 35 um eine Achse drehen wollen, die eine Lotrechte zur Achsmitte 4 bildet und durch die Mitte M der Kugeln 35 verläuft. Die so entstandenen Kräfte werden von den Kugelachsen 37 über die Gleitsteine 45a und 45b jeweils an die Nutflanken 40a von radial verlaufenden Nuten 40 in den Kugelträgerscheiben 39a und 39b weitergegeben und dort aufgefangen, da die beiden Kugelträgerscheiben 39a und 39b gegeneinander verdrehsicher über den Trägerring 43 gekoppelt sind. Nichtsdestoweniger bleibt bei den aus der gezeichneten Mittellage heraus verschwenkten Kugelachsen 37 (siehe Fig. 4) ein Differenzmoment übrig, welches je nach Übersetzungseinstellung nach vorn oder nach rückwärts drehend gerichtet ist, und vom Rumpfgetriebe an den Rahmen des Fahrzeugs weitergegeben wird. Es ist daher angezeigt, vorzugsweise die Kugelträgerscheibe 39a über einen Hebel 68, der mit dieser drehfest und möglichst formschlüssig verbunden ist, mit dem Rahmen des Fahrzeugs Zu verbinden, wie es bei der Ableitung der Bremsreaktionsmomente bei Rücktrittbremsen üblich ist.

Die Einstellung des Kugelreibradgetriebes 17 ist von der Präzision des Zusammenbaus der Hülse 10 mit der Hülsenscheibe 12 und dem Hülsendruckring 8 abhängig. Die Summierung der axialen Toleranzen wird durch die Wahl der Schmiegeradien des Schrägkugellagers 6 ausgeglichen, wobei die Tellerfeder 65 in Verbindung mit dem Kugellager 66 für die Kompensation eines evtl. Restspiels dadurch sorgt, daß sie den Führungsring 36 axial verschiebt und so die Kugeln 35 samt Kugelachsen 37 und Gleitsteinen 45a und 45b nach radial außen gegen die Ringe 25 und 27 schiebt. Hierdurch wird der verzögerungsfreie Axialkraftaufbau an den Spreizkupplungen 19 und 20 bewirkt und der Totgang im Antrieb klein gehalten.

Die Steuerung des Übersetzungsverhältnisses wird über die Steuereinrichtung 50 bewirkt, mit der die Kugelachsen 37 in jeweils der mit der Achsmitte gemeinsamen Ebene verschwenkt werden. Diese Verschwenkung erfolgt stufenlos, da die Gleitsteine 45a und 45b auf den Kurven 52a und 52b der Kurvenscheiben 51a und 51b entlang gleiten, wenn die Drehachse 53 vom Fahrradbenutzer durch Steuerbewegungen an hier nicht gezeigten Steuerhebeln verdreht wird. Sollen beispielsweise die Kugelachsen 37 aus ihrer gezeichneten Mittellage, sozusagen dem Normalgang, in dem die Antriebsdrehzahl gleich der Abtriebsdrehzahl ist, herausgeschwenkt werden, beispielsweise in Richtung Schnellgang, so müssen diese gegen den Uhrzeigersinn verschwenkt werden, was zur Folge hat, daß der Antriebsring 25 auf einen kleineren Berührkreis (Hüllkreis) der Kugeln 35 wandert, während der Abtriebsring bei einer Kugelumdrehung von einem größerem Berührkreis angetrieben wird, also schneller dreht.

Soll umgekehrt ein einem Berggang entsprechendes Übersetzungsverhältnis eingestellt werden, so müssen die Kugellachsen 37 im Uhrzeigersinn der Fig. 1 und 4 verschwenkt werden, beispielsweise in die in Fig. 4 dargestellte Position. Diese Schwenkbewegung der Achsen 37 erhält man durch Verdrehen der Drehachse 53 der Steuereinrichtung im Uhrzeigersinn der Fig. 3, was manuell oder gegebenenfalls auch mit Hilfe eines entsprechenden Stellmotors erfolgen kann. Demzufolge gleiten die Gleitsteine 45b entlang der Kurven 52b der Kurvenscheibe 51b radial einwärts, wohingegen die Gleitsteine 45a entlang der Kurven 52a der Kurvenscheibe 51a radial nach außen wandern. Auf diese Weise wird die Kugelachse 37 um den Kugelmittelpunkt M im gewünschten Sinne verschwenkt.

Gemäß Fig. 4 ergibt sich ein vergrößerter Berührkreis Kb, längs welchem die Kugel 35 an der Laufbahn 25a des Antriebsrings abrollt, sowie ein verkleinerter Berührkreis Ka, an welchem die Kugel 35 an der Laufbahn 27a des Abtriebsrings 27 abrollt. Der Durchmesser des Berührkreises Ka ist in Fig. 4 mit Da, und der Durchmesser des Berührkreises Kb mit Db bezeichnet. Das Übersetzungsverhältnis n2/n1 der Antriebsnabe, wobei mit n2 die Drehzahl der Nabenhülse 9 und mit n1 die Drehzahl des Antreibers 13 bezeichnet ist, entspricht dann dem Verhältnis Da/Db.

Bei der Steuerung kommt es darauf an, daß der Gleitstein 45b von der Kurve 52b der Kurvenscheibe 51b nach außen geschoben wird, während der Gleitstein 45a der Kurve 52a der Kurvenscheibe 51a möglichst spiellos folgen soll, um bei Umkehrung der Schaltrichtung keinen unerwünschten Totgang zu haben. Da die Gleitsteine 45a und 45b sich relativ zu den Kurvenscheiben 51a und 51b axial bewegen, wird für die Form der Berührungsoberfläche an den Gleitsteinen 45a und 45b die Form einer Kugelkalotte vorgesehen, mit Hilfe derer sich Kurven 52a und 52b erzeugen lassen, die einander spiegelbildlich gleich sind (Übergang der einen Kurve in die andere Kurve durch Drehung um eine zur Achse 4 senkrechte Achse 102 um 180°), was in fertigungsgerechter Hinsicht von Vorteil ist.

Das als Reibkugelträger ausgebildete Getriebegehäuse 39 ist mechanisch stabil und dabei einfach zusammenbaubar. Es umschließt die Steuereinrichtung und ist mit in Fig. 3 erkennbaren Ausnehmungen 104 versehen, durch die die im dargestellten Ausführungsbeispiel insgesamt 5 Kugeln radial nach außen treten können zum Kraftangriff an den Antriebsring 25 und den Abtriebsring 27.

## Patentansprüche

1. Antriebsnabe für ein Fahrzeug, insbesondere Fahrrad, umfassend
- eine Nabenachse (1,2), die eine Achse (4) der Nabe festlegt,
- eine die Nabenachse (1,2) gleichachsig und relativ dazu drehbar umschließende Nabenhülse (9),
- einen relativ zur Nabenhülse (9) und zur Nabenachse (1,2) drehbar gelagerten Antreiber (13),
- ein innerhalb der Nabenhülse (9) angeordnetes Reibradgetriebe im Kraftweg zwischen Antreiber (13) und Nabenhülse (9),
- wenigstens eine bei vom Antreiber (13) her erfolgendem Antrieb der Nabe den Kraftweg zwischen Antreiber (13) und Nabenhülse (9) schließende, bei nicht antreibendem Antreiber (13) den Kraftweg öffnende Kupplungseinrichtung (23),
- eine von außen betätigbare Steuereinrichtung (50) zur stufenlosen Einstellung des Übersetzungsverhältnisses des Reibradgetriebes (17),
**dadurch gekennzeichnet,**
daß das Reibradgetriebe als Kugelreibradgetriebe (17) ausgebildet ist, umfassend
- zwei sich axial gegenüberliegende Ringe, einen Antriebsring (25) und einen Abtriebsring (27),
- mehrere in Umfangsrichtung der Ringe (25,27) verteilte, die Ringe reibschlüssig miteinander verbindende Reibkugeln (35), die mittels Kugelachsen (37) drehbar gelagert sind, und
- einen mit der Nabenachse (1,2) drehfest verbundenen Reibkugelträger, an dem die Reibkugeln (35) mit ihren Kugelachsen (37) jeweils in einer die Achse (4) der Nabe enthaltenden Ebene schwenkbar gelagert sind,
daß der Antriebsring (25) und der Abtriebsring (37) jeweils an der von der Achse (4) abgewandten Seite der Reibkugeln (35) mit den Reibkugeln (35) in Reibkontakt stehen, und
daß die Steuereinrichtung (50) zum gemeinsamen Verschwenken der Kugelachsen (37) ausgebildet ist.

2. Antriebsnabe nach Anspruch 1,
**dadurch gekennzeichnet,** daß die Nabenachse zweiteilig ausgebildet ist mit zwei Achshälften (1 und 2), an deren voneinander beabstandeten, innerhalb der Nabe gelegenen Enden jeweils eine Kugelträgerscheibe (39a, 39b) drehfest angebracht ist, daß die Kugelträgerscheiben (39a, 39b) miteinander zur Bildung eines Getriebegehäuses (39) starr verbunden sind, und daß das Getriebegehäuse (39) als Reibkugelträger ausgebildet ist.

3. Antriebsnabe nach Anspruch 2,
**dadurch gekennzeichnet,** daß die beiden Kugelträgerscheiben (39a,39b) über einen Ring (43) miteinander starr verbunden sind.

4. Antriebsnabe nach Anspruch 2 und 3,
**dadurch gekennzeichnet,** daß die Kugelträgerscheiben (39a, 39b) mit radial verlaufenden Nuten (40) versehen sind zur Aufnahme der entsprechenden Enden der Kugelachsen (37).

5. Antriebsnabe nach Anspruch 4,
**dadurch gekennzeichnet,** daß die Enden der Kugelachsen (37) mit Gleitsteinen (45a,45b) versehen sind, die in die radial verlaufenden Nuten (40) der Kugelträgerscheiben (39a,39b) eingesetzt sind.

6. Antriebsnabe nach Anspruch 5,
**dadurch gekennzeichnet,** daß die Nuten (40) eine Breite aufweisen, die der der Gleitsteine (45a,45b) zuzüglich eines angemessenens Bewegungsspiels entsprechen.

7. Antriebsnabe nach einem der vorhergehenden Ansprüchen,
**dadurch gekennzeichnet,**
daß die Steuereinrichtung (50) eine Drehachse (53) sowie zwei mit dieser drehfest gekoppelte Kurvenscheiben (51a,51b) umfaßt, daß die Kurvenscheiben (51a,51b) beidseits der Reibkugeln (35) angeordnet sind mit Anlage der Enden der Kugelachsen (37) an den Kurven (52a,52b) der Kurvenscheiben (51a,51b), und daß die Kurven (52a,52b) mit zueinander entgegengesetzt verlaufenden Steigungsrichtungen ausgebildet sind zum Verschwenken der Kugelachsen (37) um den Mittelpunkt der Reibkugeln (35) bei Drehung der Kurvenscheiben (51a,51b) relativ zum Reibkugelträger.

8. Antriebsnabe nach Anspruch 7,
**dadurch gekennzeichnet,** daß die Reibkugeln (35) auf ihren Kugelachsen (37) drehbar gelagert sind, wobei jeweils beide Enden dieser Kugelachsen (37) mit Gleitsteinen (45a,45b) verbunden sind, die ihrerseits die Kurven (52a,52b) der Kurvenscheiben (51a,51b) berühren.

9. Antriebsnabe nach Anspruch 8,
**dadurch gekennzeichnet,** daß die Berührungsflächen der Gleitsteine (45a,45b) mit den Kurven (52a,52b) der Kurvenscheiben (51a,51b) in Form von Kugelkalotten ausgebildet sind.

10. Antriebsnabe nach einem der Ansprüche 7-9,
**dadurch gekennzeichnet,** daß die Kurven (52a,52b) der beiden Kurvenscheiben (51a,51b) derart zueinander symmetrisch ausgebildet sind, daß sie durch Drehung um eine zur Achse (4) senkrechte Drehachse (102) um 180° jeweils ineinander übergehen.

11. Antriebsnabe nach einem der vorhergehenden Ansprüche,
**dadurch gekennzeichnet,** daß sich sämtliche Reibkugeln (35) am Außenumfang eines in der Antriebsnabe um die Achse (4) drehbar gelagerten Rings (36) abstützen.

12. Antriebsnabe nach Anspruch 11,
**dadurch gekennzeichnet,** daß der Ring (36) in der Antriebsnabe axial beweglich gelagert ist, und einen zur Achse (4) geneigt verlaufenden Umfangsflächenabschnitt aufweist, an dem die Reibkugeln (35) abrollen zur Vorspannung der Reibkugeln (35) radial nach außen durch entsprechende axiale Verschiebung des Rings (36) in einer Vorspannrichtung.

13. Antriebsnabe nach Anspruch 12,
**gekennzeichnet** durch ein Vorspannfederelement zur axialen Vorspannung des Rings (36) in Vorspannrichtung.

14. Antriebsnabe nach Anspruch 13,
**dadurch gekennzeichnet,** daß das Vorspannfederelement als Tellerfeder (65) ausgebildet ist.

15. Antriebsnabe nach einem der Ansprüche 12-14,
**dadurch gekennzeichnet,** daß der Außenumfang des Rings (36) einen mittleren Abschnitt mit toroidförmiger konkaver Wölbung mit einem den Radius der Reibkugeln (35) übersteigenden Torus-Radius aufweist sowie sich in axialer Richtung beiseits anschließend jeweils einen konischen Abschnitt mit in Richtung weg vom mittleren Abschnitt zunehmendem Durchmesser.

16. Antriebsnabe nach einem der vorhergehenden Anprüche,
**gekennzeichnet** durch eine die Steuereinrichtung (50) in eine Ausgangsposition vorspannende Rückstellfeder (65a).

17. Antriebsnabe nach einem der vorhergehenden Anprüche,
**gekennzeichnet** durch einen mit der Nabenachse (1,2) drehfest verbundenen, am Fahrzeug befestigbaren Hebel (68) zur Übertragung von Reaktionsmomenten des Kugelreibradgetriebes auf das Fahrzeug.

18. Antriebsnabe nach einem der vorhergehenden Ansprüche,
**dadurch gekennzeichnet,** daß Kupplungseinrichtung eine Klinken-Freilaufkupplung (23) umfaßt.

19. Antriebsnabe nach Anspruch 18,
**dadurch gekennzeichnet,** daß die Klinken-Freilaufkupplung (23) einen mit der Nabenhülse (9) drehfest verbundenen Klinkenträger (91) umfaßt, an dem Klinken (89) gelagert sind, die in eine Klinkenverzahnung (87) einer mit dem Abtriebsring (27) verkoppelten Scheibe (12) eingreifen.

20. Antriebsnabe nach einem der vorhergehenden Anprüche,
**gekennzeichnet** durch wenigstens eine Spreizkupplung (19, 20) im Kraftweg zwischen Antreiber (13) und Nabenhülse (9).

21. Antriebsnabe nach Anspruch 20,
**dadurch gekennzeichnet,** daß der Antriebsring (25) und der Abtriebsring (27) mit je einer Spreizkupplung (19,20) versehen sind.

22. Antriebsnabe nach Anspruch 21,
**dadurch gekennzeichnet,** daß die Spreizkupplungen (19,20) Kugeln (59,60) umfassen, die innerhalb von Ausnehmungen des Antriebsrings (25) und einer diesem gegenüberliegendem Antriebsscheibe (33) sowie in Ausnehmungen des Abtriebsrings (27) und eines diesem gegenüberliegenden Druckrings (8) angeordnet sind, wobei die Ausnehmungen in Umfangsrichtung von Schrägflächen begrenzt sind.

23. Antriebsnabe nach einem der vorhergehenden Anprüche,
**gekennzeichnet** durch eine innerhalb der Nabenhülse (9) angeordnete, den Antriebsring (25) sowie den Abtriebsring (27) umgreifende, zur Achse (100) zentrisch angeordnete Hülse (10), die mit dem Antriebsring (25) und dem Abtriebsring (27) zur Aufnahme von zwischen dem Antriebsring (25) und dem Abtriebsring (27) wirkenden Axialkräften gekoppelt ist.

24. Antriebsnabe nach Anspruch 23,
**dadurch gekennzeichnet,** daß die Hülse (10) an einem ihrer axialen Enden mit einem mit dem Abtriebsring (27) gekoppelten Druckring (8) starr verbunden ist und an ihrem anderen axialen Ende mit einer Hülsenscheibe (12) starr verbunden ist, die sich an einer zwischen Hülsenscheibe (12) und Antriebsring (25) angeordneten, mit dem Antriebsring (25) gekoppelten Antriebsscheibe (33) abstützt.

25. Antriebsnabe nach Anspruch 24,
**gekennzeichnet** durch ein Schrägkugellager (6) zwischen Hülsenscheibe (12) und Antriebsscheibe (33) sowie durch jeweils eine Spreizkupplung (19,20) zwischen Antriebsscheibe (30) und Antriebsring (25) sowie zwischen Abtriebsscheibe (27) und Druckring (8).

26. Antriebsnabe nach einem der vorhergehenden Anprüche,
**gekennzeichnet** durch ein Schrägkugellager (5) zwischen einer Stirnwand (Schraubdeckel 97) der Nabenhülse (9) und dem Antreiber (13).

## Claims

1. A drive hub for a vehicle, particularly a bicycle, comprising
- a hub axle (1, 2) which establishes an axis (4) of the hub,
- a hub shell (9) which equiaxially encloses and is rotatable in relation to the hub axle (1),
- a driver (13) mounted to rotate relative to the hub shell (9) and the hub axle (1, 2),
- a friction gear disposed inside the hub shell (9) in the power path between driver (13) and hub shell (9),
- at least one coupling device (23) closing the power path between driver (13) and hub shell (9) when the driver (13) is driving and opening the power path when the driver (13) is not driving,
- a control device (50) adapted to be externally actuated for infinitely variable adjustment of the transmission ratio of the friction gear (17),
characterised in that
the friction gear is constructed as a ball friction gear (17), comprising
- two axially oppositely disposed rings, a driver ring (25) and a driven ring (27),
- distributed in the peripheral direction of the rings (25, 27) and connecting the rings to one another frictionally, a plurality of friction balls (35) rotatably mounted by means of ball axles (37) and
- a friction ball carrier rotationally rigidly connected to the hub axle (1, 2) and on which the ball axles (37) of the friction balls (35) are mounted to pivot in a plane containing the axis (4) of the hub, and in that the driver ring (25) and the driven ring (37) are in frictional contact with the friction balls (35) on that side of these latter which is remote from the axis (4) and in that the control means (50) is constructed for joint pivoting of the ball axles (37).

2. A drive hub according to Claim 1, characterised in that the hub axle is constructed in two parts with two axle halves (1 and 2) on whose spaced apart ends disposed within the hub there is in each case a rotationally rigidly mounted ball carrier disc (39a, 39b) and in that the ball carrier discs (39a, 39b) are rigidly connected to each other to form a transmission housing (39) and in that the transmission housing (39) is constructed as a friction ball carrier.

3. A drive hub according to Claim 2, characterised in that the two ball carrier discs (39a, 39b) are rigidly connected to each other by a ring (43).

4. A drive hub according to Claim 2 and 3, characterised in that the ball carrier discs (39a, 39b) are provided with radially extending grooves (40) to accommodate the corresponding ends of the ball axles (37).

5. A drive hub according to Claim 4, characterised in that the ends of the ball axles (37) are provided with sliding blocks (45a, 45b) which are inserted into the radially extending grooves (40) of the ball carrier discs (39a, 39b).

6. A drive hub according to Claim 5, characterised in that the grooves (40) are of a width which corresponds to that of the sliding blocks (45a, 45b) plus a reasonable clearance for movement.

7. A drive hub according to one of the preceding Claims, characterised in that the control means (50) comprises a pivot spindle (53) as well as two cam plates (51a, 51b) rotationally rigidly coupled to this latter and in that the cam plates (51a, 51b) are disposed on both sides of the friction balls (35) so that the ends of the ball axles (37) bear on the cams (52a, 52b) of the cam plates (51a, 51b) and in that the cams (52a, 52b) are constructed with oppositely extending directions of pitch, for pivoting the ball axles (37) about the centre point of the friction balls (35) upon rotation of the cam plates (51a, 51b) in relation to the friction ball carrier.

8. A drive hub according to Claim 7, characterised in that the friction balls (35) are mounted to rotate on their ball axles (37) whereby in each case both ends of these ball axles (37) are connected to sliding blocks (45a, 45b) which in turn contact the cams (52a, 52b) of the cam plates (51a, 51b).

9. A drive hub according to Claim 8, characterised in that the surfaces of the sliding blocks (45a, 45b) which contact the cams (52a, 52b) on the cam plates (51a, 51b) are constructed in the form of spherical cups.

10. A drive hub according to one of Claims 7 to 9, characterised in that the cams (52a, 52b) on the two cam plates (51a, 51b) are constructed to be symmetrical with one another in such a way that they merge into each other by a 180° rotation about an axis (102) which is at right-angles to the axis (4).

11. A drive hub according to one of the preceding Claims, characterised in that all friction balls (35) are braced against the outer periphery of a ring (36) mounted in the drive hub to rotate about the axis (4).

12. A drive hub according to Claim 11, characterised in that the ring (13) is mounted for axial movement within the drive hub and has a portion of its peripheral surface which extends at an angle to the axis (4) and on which the friction balls (35) roll for pre-tensioning of the friction balls (35) radially outwardly by corresponding axial displacement of the ring (36) in a pre-tensioning direction.

13. A drive hub according to Claim 12, characterised by a pre-tensioning spring element for axial pre-tensioning of the ring (36) in the pre-tensioning direction.

14. A drive hub according to Claim 13, characterised in that the pre-tensioning spring element is constructed as a plate spring (65).

15. A drive hub according to one of the Claims 12 to 14, characterised in that the outer periphery of the ring (36) comprises a middle portion of toroidal concave curvature with a torus radius exceeding the radius of the friction balls (35) and with, adjacent the two sides thereof and in an axial direction, in each case one conical portion of a diameter which increases with increasing distance from the middle portion.

16. A drive hub according to one of the preceding Claims, characterised by a restoring spring (65a) which pre-tensions the control arrangement (50) into a starting position.

17. A drive hub according to one of the preceding Claims, characterised by a lever (68) which can be fixed on the vehicle and which is rotationally rigidly connected to the hub axle (1, 2) for transmitting reaction moments from the ball friction gear to the vehicle.

18. A drive hub according to one of the preceding Claims, characterised in that the coupling means comprises a ratchet freewheel coupling (23).

19. A drive hub according to Claim 18, characterised in that the ratchet freewheel coupling (23) comprises, rotationally rigidly connected to the hub shell (9), a pawl carrier (91) on which pawls (89) are mounted and engage ratchet teeth (87) on a pinion (12) coupled to the driven ring (27).

20. A drive hub according to one of the preceding Claims, characterised by at least one expanding coupling (19, 20) in the power path between driver (13) and hub shell (9).

21. A drive hub according to Claim 20, characterised in that the driver ring (25) and the driven ring (27) are each provided with an expanding coupling (19, 20).

22. A drive hub according to Claim 21, characterised in that the expanding couplings (19, 20) comprise balls (59, 60) which are disposed inside recesses in the driver ring (25) and a drive pulley (33) disposed opposite the driver ring (25), and in recesses in the driven ring (27) and a thrust ring (8) disposed opposite the latter, the recesses being defined in the peripheral direction by sloping surfaces.

23. A drive hub according to one of the preceding Claims, characterised by, disposed within the hub shell (9) and engaging around the driver ring (25) and driven ring (27) and disposed coaxially in relation to the axis (100), a sleeve (10) which is coupled to the driver ring (25) and the driven ring (27) to accommodate axial forces acting between the driver ring (25) and the driven ring (27).

24. A drive hub according to Claim 23, characterised in that at one of its axial ends, the sleeve (10) is rigidly connected to a thrust ring (8) coupled to the driven ring (27) while at its other axial end it is rigidly connected to a sleeve pulley (12) which is biased on a driving pulley (33) coupled to the driver ring (25) and disposed between this latter and the sleeve pulley (12).

25. A drive hub according to Claim 24, characterised by an inclined ball-bearing (26) between sleeve pulley (12) and drive pulley (33) and by in each case an expanding coupling (19, 20) between drive pulley (30) and driver ring (25) and between driven pulley (27) and thrust ring (8).

26. A drive hub according to one of the preceding Claims, characterised by an inclined ball-bearing (5) between an end wall (screw cover 97) of the hub shell (9) and the driver (13).

## Revendications

1. Moyeu d'entraînement pour un véhicule, en particulier une bicyclette, comprenant :
- un axe de moyeu (1, 2), fixant un axe (4) du moyeu,
- une douille de moyeu (9), coaxiale par rapport à l'axe de moyeu (1, 2) et l'entourant en pouvant tourner autour de lui,
- un élément entraîneur (13), pouvant tourner par rapport à la douille de moyeu (9) et à l'axe de moyeu (1, 2),
- un engrenage à friction, disposé à l'intérieur de la douille de moyeu (9), dans la chaîne dynamique entre élément entraîneur (13) et douille de moyeu (9),
- au moins un dispositif d'accouplement (23) qui, en cas d'entraînement du moyeu par l'élément entraîneur (13), ferme la chaîne dynamique entre élément entraîneur (13) et douille de moyeu (9), et, en cas de non entraînement par l'élément entraîneur (13), ouvre la chaîne dynamique,
- un dispositif de commande (50), pouvant être commandé depuis l'extérieur, pour régler de façon continue le rapport de transmission de l'engrenage à friction (17),
caractérisé en ce que
- l'engrenage à friction est réalisé sous forme d'engrenage à friction sphérique (17), comprenant :
- deux bagues, placées axialement en regard l'une de l'autre, constituant une bague menante (25) et une bague menée (27),
- plusieurs billes de friction (35), réparties dans la direction périphérique des bagues (25, 27), reliant les bagues l'une à l'autre et montées à rotation au moyen d'axes de billes (37), et
- un support de billes de friction, relié, assujetti en rotation, à l'axe de moyeu (1, 2) et sur lequel les billes de friction (35) avec leurs axes de bille (37) tourillonnent chacune, en pouvant pivoter, dans un plan contenant l'axe (4) du moyeu,
en ce que la bague menante (25) et la bague menée (37) soient chacune en contact de friction avec les billes de friction (35), sur la face, opposée à l'axe (4), des billes de friction (35),
en ce que le dispositif de commande (50) est réalisé pour produire un pivotement commun des axes de billes (37).

2. Moyeu d'entraînement selon la revendication 1, caractérisé en ce que l'axe de moyeu est réalisé en deux parties, avec deux demi-axes (1 et 2), sur chacune des extrémités, espacées l'une de l'autre et situées à l'intérieur du moyeu, desquelles un disque support de billes (39a, 39b) est monté assujetti à rotation, en ce que les disques supports de billes (39a, 39b) sont reliés ensemble rigidement pour constituer un boîtier de transmission (39), et en ce que le boîtier de transmission (39) est réalisé sous forme de support de billes de friction.

3. Moyeu d'entraînement selon la revendication 2, caractérisé en ce que les deux disques supports de billes (39a, 39b) sont reliés ensemble rigidement par l'intermédiaire d'un anneau (43).

4. Moyeu d'entraînement selon les revendications 2 et 3, caractérisé en ce que les disques supports de billes (39a, 39b) sont pourvus de rainures (40) s'étendant radialement, pour recevoir les extrémités correspondantes des axes de billes (37).

5. Moyeu d'entraînement selon la revendication 4, caractérisé en ce que les extrémités des axes de billes (37) sont pourvues de patins de coulissement (45a, 45b), insérés dans les rainures (40) s'étendant radialement des disques supports de billes (39a, 39b).

6. Moyeu d'entraînement selon la revendication 5, caractérisé en ce que les rainures (40) ont une largeur correspondant à celle des patins de coulissement (45a, 45b) en tenant compte d'un jeu modéré.

7. Moyeu d'entraînement selon l'une des revendications précédentes, caractérisé en ce que le dispositif de commande (50) comprend un axe de rotation (53) ainsi que deux disques à came (51a, 51b) lui étant couplés avec assujettissement en rotation, en ce que les disques à came (51a, 51b) sont disposés des deux côtés des billes de friction (35), avec appui des extrémités des axes de billes (37) sur les cames (52a, 52b) des disques à came (51a, 51b), et en ce que les cames (52a, 52b) sont réalisées avec des directions de pente mutuellement inverses, pour faire pivoter les axes de billes (37) autour du centre des billes de friction (35) lors de la rotation des disques de came (51a, 51b) par rapport au support de billes de friction.

8. Moyeu d'entraînement selon la revendication 7, caractérisé en ce que les billes de friction (35) sont montées de façon à pouvoir tourner sur leurs axes de bille (37), les deux extrémités de chacun de ces axes de bille (37) étant reliées à des patins de coulissement (45a, 45b), placés de leur côté en contact avec les cames (52a, 52b) des disques à came (51a, 51b).

9. Moyeu d'entraînement selon la revendication 8, caractérisé en ce que les surfaces de contact des patins de coulissement (45a, 45b) coopérant avec les cames (52a, 52b) des disques à came (51a, 51b) sont réalisées sous forme de calottes sphériques.

10. Moyeu d'entraînement selon l'une des revendications 7 à 9, caractérisé en ce que les cames (52a, 52b) des deux disques à came (51a, 51b) sont réalisés symétriques les unes des autres, de manière qu'elles se transforment les unes en les autres par rotation de 180° autour d'un axe de rotation (102) perpendiculaire à l'axe (4).

11. Moyeu d'entraînement selon l'une des revendications précédentes, caractérisé en ce que l'ensemble des billes de friction (35) prennent appui sur la périphérie extérieure d'un anneau (36) monté de façon à pouvoir tourner autour de l'axe (4), dans le moyeu d'entraînement.

12. Moyeu d'entraînement selon la revendication 11, caractérisé en ce que l'anneau (36) est monté de façon à pouvoir se déplacer axialement dans le moyeu d'entraînement et présente une section de surface périphérique, s'étendant obliquement par rapport à l'axe (4) et sur laquelle les billes de friction (35) roulent, pour précontraindre les billes de friction (35) radialement vers l'extérieur, par déplacement axial correspondant de l'anneau (36) dans une direction de précontrainte.

13. Moyeu d'entraînement selon la revendication 12, caractérisé par un élément élastique de précontrainte, assurant une précontrainte axiale de l'anneau (36), dans la direction de précontrainte.

14. Moyeu d'entraînement selon la revendication 13, caractérisé en ce que l'élément élastique de précontrainte est réalisé sous forme de ressorts à disques (65).

15. Moyeu d'entraînement selon l'une des revendications 12 à 14, caractérisé en ce que la périphérie extérieure de l'anneau (36) présente une section médiane à courbure concave toroïdale, avec un rayon de tore supérieur au rayon des billes de friction (35), ainsi que, s'y raccordant sur chacun des deux côtés en direction axiale, une section conique ayant un diamètre allant en augmentant lorsqu'on s'écarte de la section médiane.

16. Moyeu d'entraînement selon l'une des revendications précédentes, caractérisé par un ressort de rappel (65a), assurant la précontrainte en position initiale du dispositif de commande (50).

17. Moyeu d'entraînement selon l'une des revendications précédentes, caractérisé par un levier (68), assujetti en rotation à l'axe de moyeu (1, 2) et pouvant être fixé sur le véhicule, destiné à transmettre au véhicule des couples de réaction de l'engrenage à friction sphérique.

18. Moyeu d'entraînement selon l'une des revendications précédentes, caractérisé en ce que le dispositif d'accouplement comprend un embrayage à roue libre (23) à cliquet.

19. Moyeu d'entraînement selon la revendication 18, caractérisé en ce que l'embrayage à roue libre à cliquet (23) comprend un support de cliquet (91), relié en rotation à la douille de moyeu (9) et sur lequel sont montés à rotation des cliquets (89) s'engageant dans une denture d'encliquetage (87) d'un disque (12) couplé à la bague menée (27),

20. Moyeu d'entraînement selon l'une des revendications précédentes, caractérisé par au moins un embrayage à écartement (19, 20), dans la chaîne dynamique, entre élément entraîneur (13) et douille de moyeu (9).

21. Moyeu d'entraînement selon la revendication 20, caractérisé en ce que la bague menante (25) et la bague menée (27) sont chacune pourvues d'un embrayage à écartement (19, 20).

22. Moyeu d'entraînement selon la revendication 21, caractérisé en ce que les embrayages à écartement (19, 20) comprennent des billes (59, 60), disposées à l'intérieur d'évidements de la bague menante (25) et d'un disque menant (33), disposé en regard de celle-ci, ainsi que dans des évidements de la bague menée (27) et d'un cône de serrage (8) placé en regard d'elle, les évidements étant limités en direction périphérique par des faces inclinées.

23. Moyeu d'entraînement selon l'une des revendications précédentes, caractérisé par une douille (10), disposée à l'intérieur de la douille de moyeu (9), entourant la bague menante (25) ainsi que la bague menée (27), centrée par rapport à l'axe (100) et couplée à la bague menante (25) et à la bague menée (27) pour supporter les efforts axiaux agissant entre la bague menante (25) et la bague menée (27).

24. Moyeu d'entraînement selon la revendication 23, caractérisé en ce qu'à l'une de ses extrémités axiales, la douille (10) est reliée rigidement à un cône de serrage (8), couplé à la bague menée (27) et, à son autre extrémité axiale, est reliée rigidement à un disque de douille (12), prenant appui sur un disque d'entraînement (33), disposé entre disque de douille (12) et bague menante (25) et couplé à la bague menante (25).

25. Moyeu d'entraînement selon la revendication 24, caractérisé par un roulement à billes à disposition oblique (6), entre le disque de douille (12) et le disque d'entraînement (33), ainsi que par un embrayage à écartement (19, 20), monté chaque fois entre disque d'entraînement (30) et bague menante (25), ainsi qu'entre bague menée (27) et cône de serrage (8).

26. Moyeu d'entraînement selon l'une des revendications précédentes, caractérisé par un roulement à billes à disposition oblique (5), entre une paroi frontale (couvercle vissé 97) de la douille de moyeu (9) et élément entraîneur (13).
